# EUROPEAN PATENT APPLICATION

(11) **EP 0 841 816 A1**
(43) Date of publication of application: **13.05.1998**
(21) Application number: 96250259.7
(22) Date of filing: 12.11.1996
(51) Int. Cl.: H04N 7/14

(54) **Computer monitor**

(71) Applicant: Lite-On Technology Corp., Taipei (TW)
(72) Inventor: The designation of the inventor has not yet been filed
(74) Representative: UEXKÜLL & STOLBERG

(57) **Abstract**

The present invention is related to a computer monitor, especially, a monitor with a built-in camera and used at the design of multi-media, characterized in that: said camera is built in the side walls of the computer monitor and its lens is in the same orientation as the screen of the computer monitor.

## Description

### Field of the Invention

The present invention is related to a computer monitor, especially, a monitor with a built-in camera and used at the design of multi-media.

### Description of the Prior Art

Since the development of the communication technology, the object of sharing network resources each other is accomplished. Through the linkage of the internet the information can be transferred by BBS, E-Mail, WWW, and the like, and because of the development of the computer multi-media, the types of communication are not limited by using text, other transformation media such as image, voice, and others are also used to transfer information. In the novel multi-media computer communication network, the images and voices are digitized by camera and microphone and are transferred by network to the user's terminal via optical fiber or modem. So the multi-media communications of image and voice are accomplish by monitors and speaker.

### The Problem of The Present Invention

In the prior art the camera is equipped on the top of the computer monitor However, since the position of the monitor is higher than the user's position, the image of the user derived by the camera above the monitor is from the elevation angle, thus such an image is suffered from distortion and the visual effect is unnatural.

### Summary of the Invention

Accordingly, because the disadvantage described hereinbefore, the object of the present invention is to provide a new design wherein a camera is equipped on a preferred position of left side (or right side) of the computer monitor so the camera can capture a preferred image of the user from a preferred aspect.

### Brief Description of the Figures

Fig. 1 is a front view of a computer monitor with built-in camera in the prior art.

Fig. 2 is a front view of a computer monitor with built-in camera in the present invention.

Fig. 3 is a top view of a computer monitor with built-in camera in the present invention.

Fig. 4 is a side view of a computer monitor with built-in camera in the present invention.

Fig. 5 is a front view of a computer monitor with built-in camera in another preferred embodiment of the present invention.

### Description of the Preferred Embodiment

The preferred embodiment of the present invention will be described in the followings, referring to the accompanying figures.

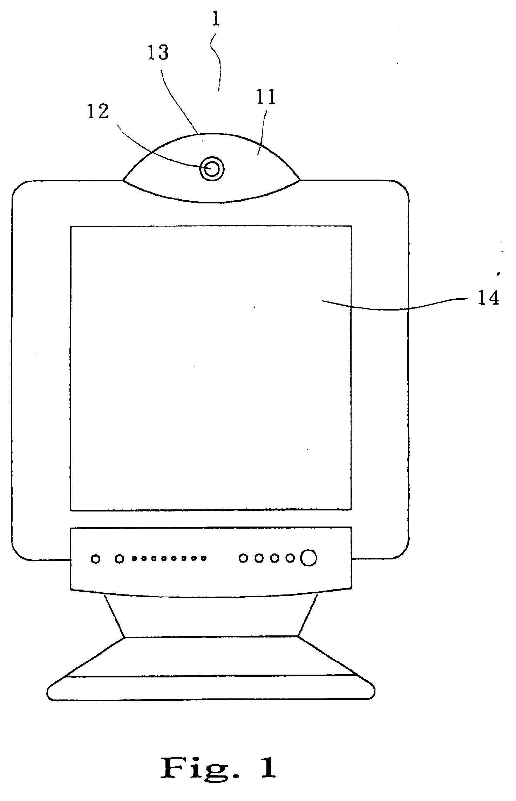

Fig. 1 shows a prior computer monitor with a built-in camera 11 which is covered by the extension of the outside element 13 above the computer monitor 1, wherein, the lens 12 of the camera 11 is located above the screen 14. Such a design is considered from the viewpoint of the symmetry and shape of the computer monitor. However, the arrangement aforementioned will induce the lens 12 of the camera 11 captures the image of the user in front of the screen with an elevation angle so that the image will suffer some compression and has bad visual effect.

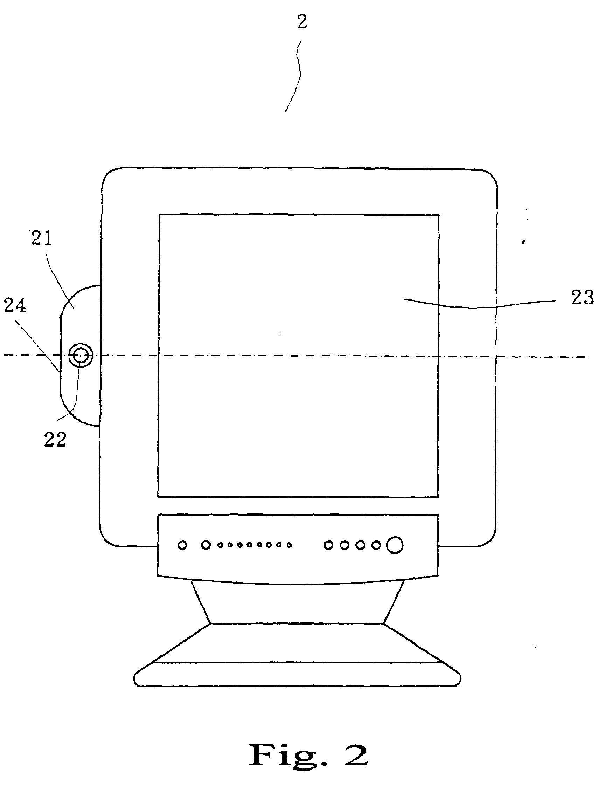

Fig. 2 is the front view of the present invention. As shown in the figure, the outer wall element 24 for covering the camera 21 is extended the side wall of the outer shell of the screen 23 of the computer monitor 2, wherein, the lens 22 of the camera 21 is projected from the outer wall element 21 so to capture the image of user in front of the screen 23. Fig. 2 shows that the lens of the camera 21 is approximately located at the medium of the computer monitor 2.

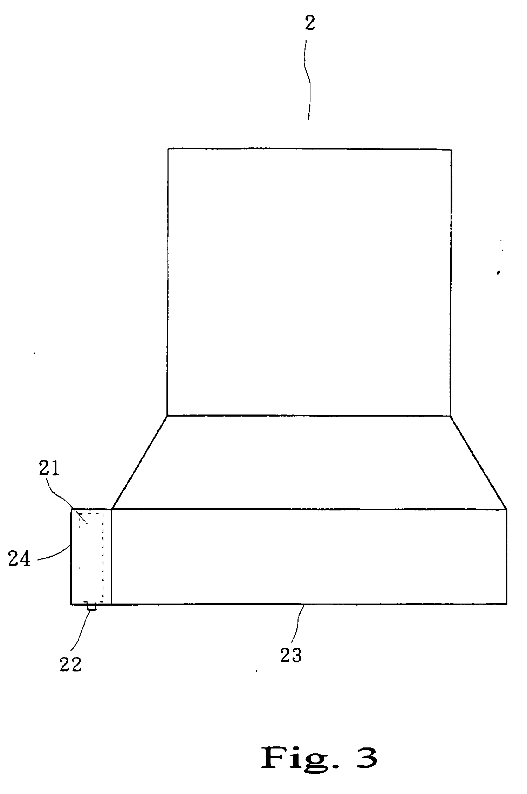

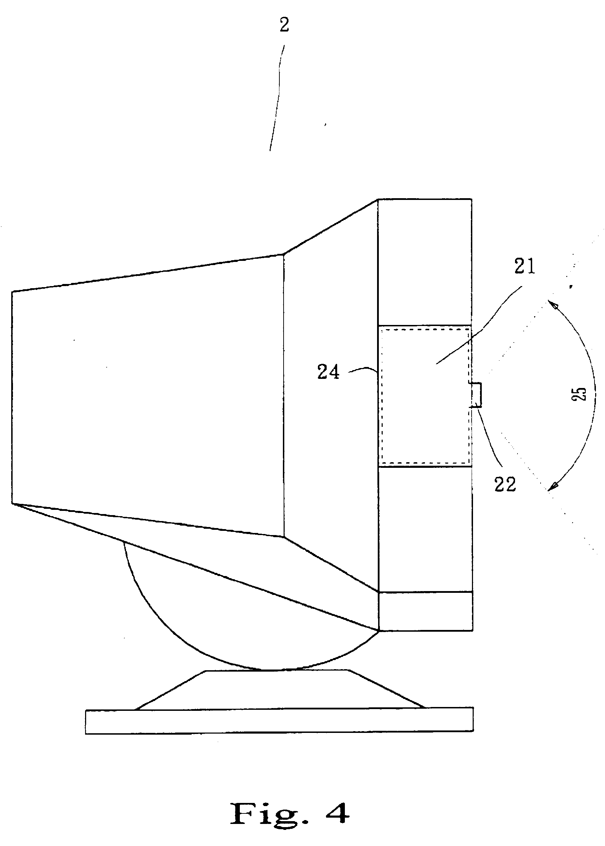

Referring to Fig. 3 which is the top view of the present invention. Outer wall element 24 for covering the camera 21 is extended from the side wall of the outer shell of the computer monitor 2 and forms the side wall of the computer monitor; Fig. 4 is the side view of the present invention, wherein the camera is covered by the side wall 24 and is formed on the medium of the side wall of the computer monitor 2. The lens 22 of the camera 21 is located approximately in the same height as the point at which the user looks the computer screen so that when the lens 22 captures the user's image from the aspect 25, it is approximately at the same horizontal position of the user. The image derived from this aspect is more natural and more practical than that derived from an elevational angle.

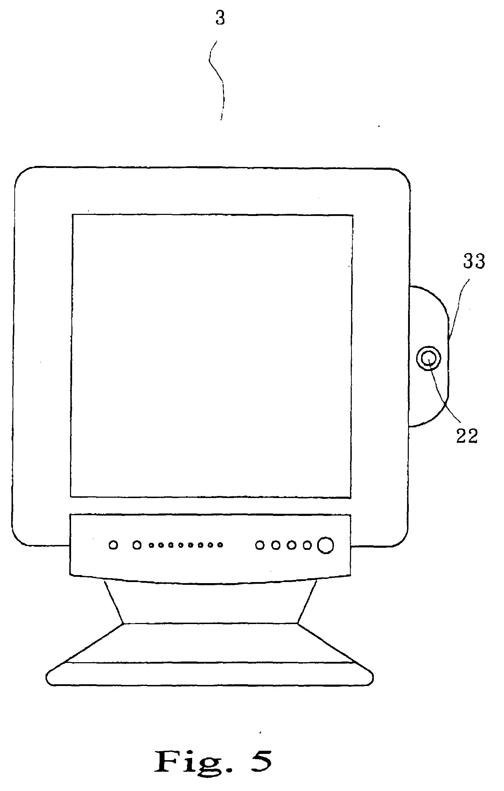

Fig. 5 shows another embodiment wherein the outer wall element 33 is extended from another side wall of the outer shell of the computer 3 for covering the camera 21.

While the invention has been described in connection with what is presently considered to be the most practical and preferred embodiment, it is to be understood to those skilled in the art can make various modifications and variations about the embodiment. Thus, the invention is not to be limited the disclosed embodiment, but on the contrary, is intended to cover various modifications and equivalent arrangements included within the spirit and scope of the appended claims.

## Claims

1. A computer monitor with a built-in camera, characterized in that: said camera is built in the side walls of the computer monitor and its lens is in the same orientation as the screen of the computer monitor.
